# EUROPEAN PATENT SPECIFICATION

(11) **EP 0 988 893 B1**
(45) Date of publication and mention of the grant of the patent: **12.05.2004**
(21) Application number: 99307085.3
(22) Date of filing: 07.09.1999
(51) Int. Cl.: B01L 3/00, C12M 1/40, G01N 33/53

(54) **Multiwell plate with reagent-matrix chips in wells**
Mehrfachloch-Platte mit Reagenzmatrix-Chip in den Löchern
Plaque à cavités multiples comprenant une carte de réactifs sous forme de matrice

(30) Priority: 23.09.1998 EP 98307732
(43) Date of publication of application: 29.03.2000
(73) Proprietor: Randox Laboratories Ltd., Crumlin, Co. Antrim BT29 4QY (GB)
(72) Inventor: Fitzgerald, Stephen Peter, Crumlin, Co. Antrim BT29 4QY (GB); McConnell, Robert Ivan, Crumlin, Co. Antrim BT29 4QY (GB); Lamont, John Victor, Crumlin, Co. Antrim BT29 4QY (GB)
(74) Representative: Skone James, Robert Edmund

(56) References cited:
- EP-A- 0 197 729
- EP-A- 0 569 753
- EP-A- 0 745 851
- WO-A-95/11755
- FR-A- 2 770 515
- GB-A- 2 147 698
- US-A- 4 761 378

## Description

The invention relates to assay devices for immunoassays.

Recently, in order to increase the throughput of immunoassays, assay devices in the form of chips have been developed on which is deposited an array of localised reactive sites containing potentially many different reactive species, for example different antibodies. These reactive species react with a respective different analyte in a sample supplied to the chip. Following removal of the unbonded sample, the chip can then be examined to determine the presence or absence of the respective analytes. An example of a method for preparing the reaction sites is described in more detail in GB-A-2324866 and a method for analysing the substrate is described in more detail in EP-A-0902394. The analysis typically involves viewing and measuring chemiluminescent radiation at the reaction sites using a low light level CCD camera system or the like.

A problem with these substrates is that they are small having typical dimensions 10mm x 10mm x 1mm thus making them difficult to handle. This problem is enhanced by the fact that the chips carry many small reaction sites which will be damaged if incorrectly handled. A typical chip will have 100 or more such reaction sites.

EP-A-197729, EP-A-745851 and GB-A-2147698 all disclose immunassay devices with inserts, which carry reactive sites, for location in respective wells. These are relatively cumbersome and much less convenient than chips.

In accordance with the present invention, an assay assembly comprises a chip on which an array of reactive species is immobilised, the chip being located in a storage well having a base and side walls. A protective, removable packaging may be provided over the storage well for protecting the assay device in transit.

This invention overcomes the problems mentioned above by placing the chip in a storage well, thus protecting the assay device while it is being handled during an immunoassay process. In addition, by providing a protective, removable packaging over the storage well (as is preferred), the complete assembly of chip, storage well, and packaging can be prepared centrally and then sent to the end user easily, without risk of damaging the chip and in particular the reactive sites. The form of the storage well will depend on a number of factors. If, for example, the reactive sites are to be examined using a chemiluminescent (or fluorescent or other lighting machine) technique, it is advantageous to make the walls of the storage well dark, preferably black, to reduce reflections/scattering of light and, where the storage well is joined to adjacent storage wells, to reduce or eliminate the transmission of light into adjacent wells. The base and sidewall of the storage well may therefore be made of a black material such as pigmented plastic or could be coated/painted in a black material.

The base is preferably continuous but could have a central aperture surrounded by a lip.

Another problem which can arise with the use of storage wells is due to the liquid meniscus of the liquid reagent which is used in the storage well during the immunoassay. If this reagent must remain in the well during a final analysis stage, the meniscus will contribute to distortion and abberation of the image of the reactive sites viewed by the camera system.

One approach is to place the chip on its edge in the storage well. The well would then need to have a transparent side wall to enable the reactive sites to be viewed or could have a sufficiently large top opening to enable the device to be viewed from the top.

Conventionally, however, the inner surface of the sidewall tapers inwardly adjacent the base. The use of a tapering sidewall allows the cross-sectional area of the open part of a well to be maximised and therefore that of the meniscus which is thereby flattened and thus the abberations are reduced. Also, the chip can be laid flat on the base for viewing from the top.

Further flattening can be achieved by the selection of suitable well material and internal surface finish. Of course, the material chosen for the wells and any coatings applied to the inside should be chemically unreactive so as not to effect the immunoassay. Preferred materials comprise PVC and polypropylene.

A further advantage of the use of a taper is that it facilitates easy substrate placement and location. This is particularly important in the case of an automated process for loading substrates into the wells.

Although individual storage wells could be provided, preferably a number of such storage wells are provided fixed together in an array. This again simplifies the handling of chips by protecting them within the wells and also makes it easier to handle the storage wells since the array will have a larger size than each individual well.

Preferably, the chip is retained in the storage well by some form of retaining means. The retaining means could be in the form of retaining clips or adhesives to glue the substrates to the base. Neither of these is particularly desirable since they could effect the immunoassay. Preferably, the retaining means comprises one or more hot or cold formed projections on the inner surface of the sidewall. These could be formed prior to supplying the substrate, which is then press fitted into the well, or after the substrate has been supplied.

Typically, each storage well is square in plan since this is suited to the square format of conventional CCD cameras. However, other plan forms such as rectangular or circular are envisaged.

To further ease handling, preferably the assembly further comprises a carrying tray for carrying one or more storage wells for use with an assay device processing instrument.

Such a carrying tray can then be used not only for holding the storage well(s) during supply to a user but also in an immunoassay machine.

An example of an array of storage wells according to the invention will now be described with reference to the accompanying drawings, in which:-
Figure 1 is a perspective view of the array from above;
Figure 2 is a section taken on the line 2-2 in Figure 1 but showing a biochip in one of the storage wells;
Figure 3 is a perspective view of the section shown in Figure 2; and,
Figure 4 is a perspective view of a carrying tray for the array of storage wells.

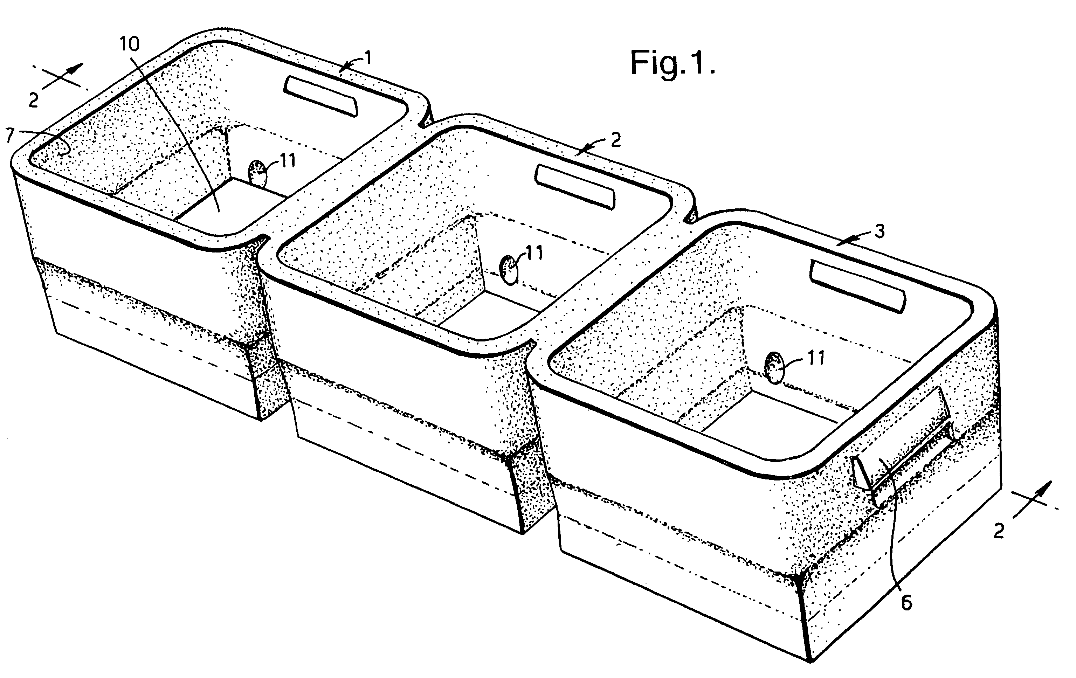

Figure 1 illustrates an array of three storage wells 1-3 formed from a one-piece plastics moulding of P.V.C. or polypropylene. For the reasons given above, the plastics material incorporates a black pigment. Each storage well 1-3 has a similar form and as can be seen in Figure 1 is substantially square in plan. For convenience, only the storage well 1 will be described in detail.

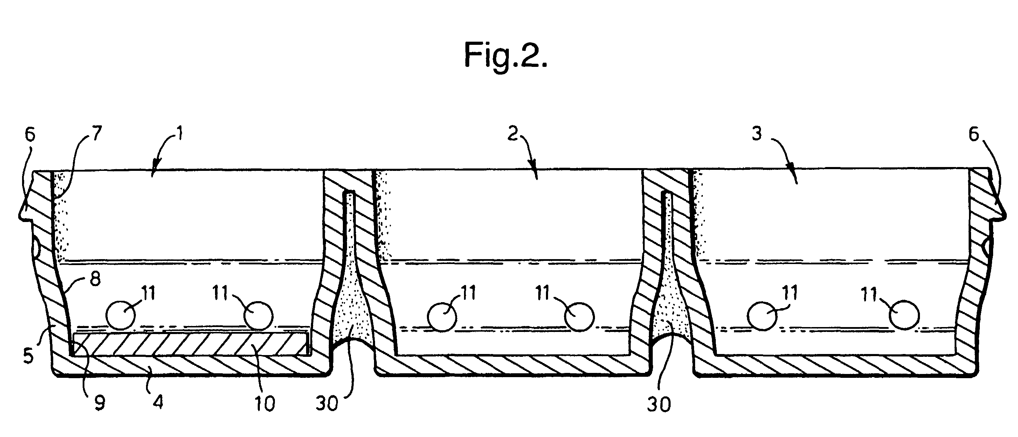

The storage well 1 has a base 4 and a sidewall 5 surrounding the base. As can be seen in Figure 2, the sidewalls 5 of each storage well are integrally formed at the junctions between the storage wells.

Protrusions 6 are moulded at each end of the array to enable the array to be handled easily.

Each sidewall 5 has an upper section 7 which is substantially vertical with respect to the base 4 and a lower section 8 which tapers inwardly. The taper terminates just short of the base 4 so as to define a region 9 having a width and height corresponding to that of a biochip 10. Typical array dimensions are: 42mm long, 9mm high and 14mm wide at the top.

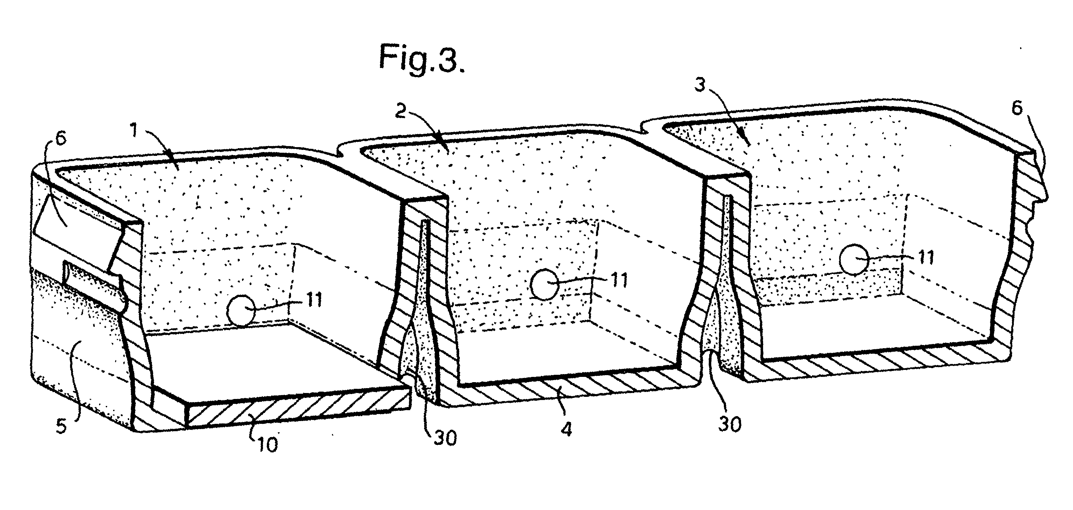

Following construction of the array of storage wells 1-3, each is supplied with a biochip 10. The biochips 10 can be prepared in any conventional manner so as to attach ligands on respective reaction sites. For example, ligands could be immobilized by means of microfluidic dispensing of the ligand onto the substrate, which is chemically activated. Alternative chemical or physical methods could be used. It is important that the method of immobilisation, e.g. covalent immobilisation, is such that ligands are not released during incubation and washing steps. Each chip which has dimensions 10mm x10mm and is about 1mm thick is then dropped into the respective storage well 1-3 and one such biochip 10 is shown in the storage well 1 in Figures 2 and 3.

Each biochip 10 is then secured in the base of the storage well by cold or hot forming bumps 11 on at least one side section of the sidewall 5. These bumps may be either preformed for press fitting or post-formed after insertion of the biochip 10.

As well as being tapered, the inner surfaces of the sidewalls 5 are preferably provided with a polished finish to reduce the curvature of the liquid meniscus and minimise optical abberations.

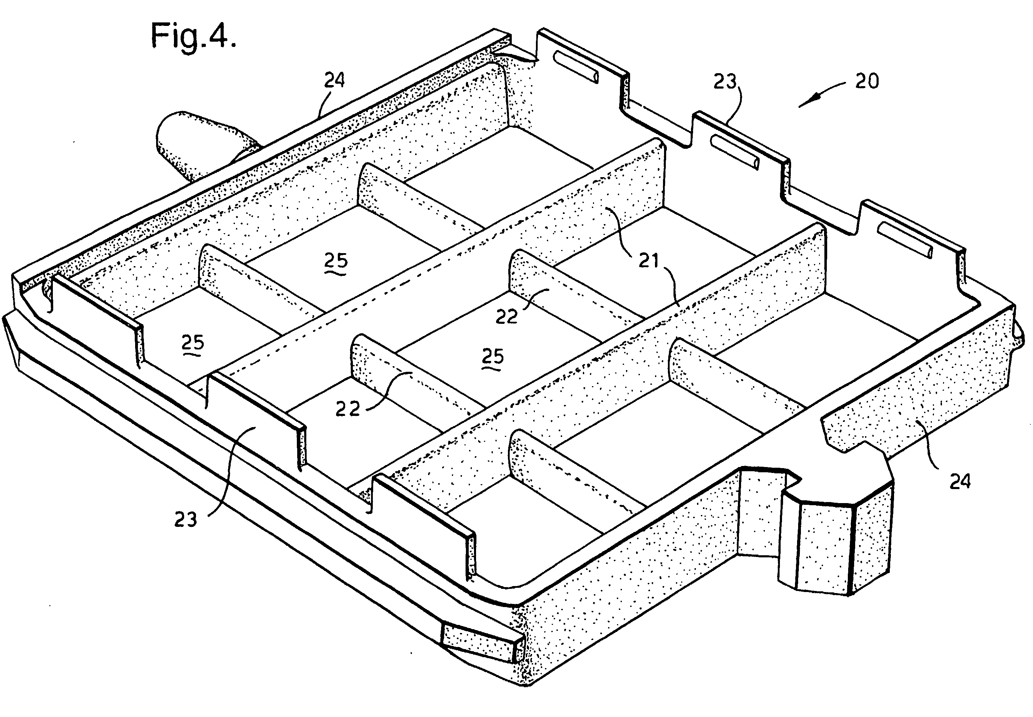

Following these steps, the set of three storage wells can then be prepacked in an individual sealed "bubble" on a tape forming a roll for reel dispensing. However, in the preferred approach, three sets of storage well arrays of the type shown in Figure 2 are loaded onto a carrying tray 20 as shown in Figure 4. This carrying tray is made of a plastics moulding and has two sets of crossbars 21,22 extending between opposite sidewalls 23,24 respectively. Nine openings 25 are defined into which the respective storage wells can be located. Each set of three storage wells 1-3 is loaded parallel to the crossbars 21 with the crossbars 22 entering into corresponding recesses 30 between adjacent storage wells. The loaded carrier tray is then sealed in suitable packing materials for transportation. The user can then either remove the storage wells from the carrier tray or, preferably, leave them in place and use the carrier tray to move the storage wells about the immunoassay process, for example as described in more detail in our copending European Patent Application No. 98307706.6.

A further option is to locate a number of the trays shown in Figure 4 with loaded storage wells into individual compartments of a stack defined by a housing. That housing can then be packaged for transportation. In this case, the trays could be directly extracted from the housing by an assay instrument or, of course, manually extracted as required.

## Claims

1. An assay assembly comprising a chip (10) on which an array of reactive species is immobilised, the chip being located in a storage well having a base and side walls.

2. An assembly according to claim 1, further comprising a protective, removable packaging provided over the storage well.

3. An assembly according to any of the preceding claims, wherein the chip substantially fills the area of the base.

4. An assembly according to any of the preceding claims, wherein the chip is retained in the storage well by retaining means.

5. An assembly according to claim 4, wherein the retaining means comprises one or more hot or cold formed projections on the inner surface of the side wall.

6. An assembly according to any of the preceding claims, further comprising a carrying tray for carrying one or more storage wells for use with a chip processing instrument.

7. An assembly according to claim 6, further comprising a plurality of carrying trays arranged in a stack.

8. An assembly according to any of the preceding claims, wherein the inner surface of the side wall of the storage well tapers inwardly adjacent the base.

9. An assembly according to any of the preceding claims, wherein the base is square.

10. An assembly according to any of the preceding claims, wherein the storage well comprises a plastics moulding.

11. An assembly according to any of the preceding claims, the assembly having a plurality of the storage wells fixed together in an array.

12. An assembly according to claim 11, wherein the array comprises three storage wells, preferably arranged in a line.

13. An assembly according to claim 11 or claim 12, when dependent on claim 10, wherein the storage wells in the array are made from a single plastics moulding.

14. An assembly according to any of the preceding claims, further comprising a protective, removable packaging over the or each storage well.

## Patentansprüche

1. Zusammengefügte Einheit für Assays, umfassend einen Chip (10), auf welchem eine regelmäßige Anordnung von reaktiven Spezies immobilisiert ist, wobei der Chip sich in einer Aufbewahrungsvertiefung, welche eine Grundfläche und Seitenwände aufweist, befindet.

2. Zusammengefügte Einheit nach Anspruch 1, welche ferner eine schützende, entfernbare Verpackung, welche über der Aufbewahrungsvertiefung vorgesehen ist, umfasst.

3. Zusammengefügte Einheit nach einem der vorangegangenen Ansprüche, wobei der Chip die Fläche der Grundfläche im wesentlichen ausfüllt.

4. Zusammengefügte Einheit nach einem der vorangegangenen Ansprüche, wobei der Chip in der Aufbewahrungsvertiefung durch Rückhaltemittel zurückgehalten wird.

5. Zusammengefügte Einheit nach Anspruch 4, wobei das Rückhaltemittel einen oder mehrere warm oder kalt geformte Vorsprünge an der inneren Oberfläche der Seitenwand umfasst.

6. Zusammengefügte Einheit nach einem der vorangegangenen Ansprüche, welche ferner eine Trägerplatte zum Tragen von einer oder mehreren Aufbewahrungsvertiefungen für eine Verwendung mit einem Instrument für die Weiterbehandlung des Chips umfasst.

7. Zusammengefügte Einheit nach Anspruch 6, welche ferner eine Mehrzahl von Trägerplatten, welche in einem Stapel angeordnet sind, umfasst.

8. Zusammengefügte Einheit nach einem der vorangegangenen Ansprüche, wobei die innere Oberfläche der Seitenwand der Aufbewahrungsvertiefung sich angrenzend an die Grundfläche nach innen verjüngt.

9. Zusammengefügte Einheit nach einem der vorangegangenen Ansprüche, wobei die Grundfläche quadratisch ist.

10. Zusammengefügte Einheit nach einem der vorangegangenen Ansprüche, wobei die Aufbewahrungsvertiefung ein Kunststoff-Formteil umfasst.

11. Zusammengefügte Einheit nach einem der vorangegangenen Ansprüche, wobei die zusammengefügte Einheit eine Mehrzahl der Aufbewahrungsvertiefungen miteinander verbunden in einer regelmäßigen Anordnung aufweist.

12. Zusammengefügte Einheit nach Anspruch 11, wobei die regelmäßige Anordnung drei Aufbewahrungsvertiefungen, die vorzugsweise in einer Reihe angeordnet sind, umfasst.

13. Zusammengefügte Einheit nach Anspruch 11 oder 12, sofern abhängig von Anspruch 10, wobei die Aufbewahrungsvertiefungen in der regelmäßigen Anordnung aus einem einzigen Kunststoff-Formteil hergestellt sind.

14. Zusammengefügte Einheit nach einem der vorangegangenen Ansprüche, welche ferner eine schützende, entfernbare Verpackung über der oder jeder Aufbewahrungsvertiefung umfasst.

## Revendications

1. Ensemble d'analyse, comprenant une pastille (10) sur laquelle est immobilisé un arrangement formé d'une espèce réactive, la pastille étant placée dans une cuve de stockage ayant une base et des parois latérales.

2. Ensemble selon la revendication 1, comprenant en outre un conditionnement protecteur amovible placé sur la cuve de stockage.

3. Ensemble selon l'une des revendications précédentes, dans lequel la pastille remplit pratiquement toute l'étendue de la base.

4. Ensemble selon l'une quelconque des revendications précédentes, dans lequel la pastille est retenue dans la cuve de stockage par un dispositif de retenue.

5. Ensemble selon la revendication 4, dans lequel le dispositif de retenue comporte une ou plusieurs saillies formées à froid ou à chaud à la surface interne de la paroi latérale.

6. Ensemble selon l'une quelconque des revendications précédentes, comprenant en outre un plateau de transport d'une ou plusieurs cuves de stockage destiné à être utilisé avec un instrument de traitement de pastille.

7. Ensemble selon la revendication 6, comprenant en outre plusieurs plateaux de transport disposés en empilement.

8. Ensemble selon l'une quelconque des revendications précédentes, dans lequel la surface interne de la paroi latérale de la cuve de stockage est inclinée vers l'intérieur près de la base.

9. Ensemble selon l'une quelconque des revendications précédentes, dans lequel la base est carrée.

10. Ensemble selon l'une quelconque des revendications précédentes, dans lequel la cuve de stockage est un moulage de matière plastique.

11. Ensemble selon l'une quelconque des revendications précédentes, l'ensemble ayant plusieurs cuves de stockage fixées ensemble sous forme d'un arrangement.

12. Ensemble selon la revendication 11, dans lequel l'arrangement comprend trois cuves de stockage, de préférence alignées.

13. Ensemble selon la revendication 11 ou 12 lorsqu'elle dépend de la revendication 10, dans lequel les cuves de stockage de l'arrangement sont formées d'un seul moulage de matière plastique.

14. Ensemble selon l'une quelconque des revendications précédentes, comprenant en outre un conditionnement protecteur amovible placé sur la cuve ou chaque cuve de stockage.
